# EUROPEAN PATENT SPECIFICATION

(11) **EP 4 474 179 B1**
(45) Date of publication and mention of the grant of the patent: **20.08.2025**
(21) Application number: 23177862.2
(22) Date of filing: 07.06.2023
(51) Int. Cl.: B60G 11/28, B60G 11/30, F16F 9/05, F16F 9/54, F16J 15/02, B60G 15/12, F16F 9/08, F16F 9/36

(54) **TOP PORT APPARATUS FOR AN AIR SUSPENSION**
OBERE ANSCHLUSSVORRICHTUNG FÜR EINE LUFTFEDERUNG
APPAREIL À ORIFICE SUPÉRIEUR POUR UNE SUSPENSION PNEUMATIQUE

(43) Date of publication of application: 11.12.2024
(73) Proprietor: Hyundai Mobis Co., Ltd., Gangnam-gu Seoul 06141 (KR)
(72) Inventor: Branco, Antonio, 21244 Buchholz i.d.N. (DE); Eppler, Marco, 21224 Rosengarten (DE); Velladurai, Palani, 61169 Friedberg (DE); Vargas, Eduardo, 55118 Mainz (DE); Drachenberg, Alexander, 35516 Münzenberg (DE); Santoso, Bravo, 65760 Eschborn (DE); Jeutsopkeng, Fabien, 60431 Frankfurt am Main (DE)
(74) Representative: Vossius & Partner Patentanwälte Rechtsanwälte mbB

(56) References cited:
- WO-A1-2016/110357
- KR-B1- 101 327 048
- US-A1- 2003 067 103
- US-A1- 2004 119 212

## Description

### BACKGROUND

### TECHNICAL FIELD

Exemplary embodiments of the present disclosure relate to a top port apparatus for air suspension, and more particularly, to a top port apparatus for air suspension with improved airtightness and durability.

### DISCUSSION OF THE BACKGROUND

In general, suspension systems improve driving stability and ride comfort while a vehicle is traveling by performing functions such as absorbing vibration or shock transmitted from the road surface through an axle and balancing a vehicle body between the axle and the vehicle body.

Among these suspension systems, air suspension may adjust an air pressure in an air spring by supporting a vehicle body with an air spring using the elasticity of compressed air and thus adjust the pressure according to the number of passengers or the condition of the road surface, thereby keeping the spring smooth at all times. Therefore, the air suspension is more advantageous for ride comfort.

In addition, since the air suspension behaves nonlinearly in its characteristics, the pressure and volume of gas are inversely proportional at a certain temperature. Accordingly, the air suspension has a characteristic in that when a loading weight increases due to loading of people or cargo, the air is compressed to provide a higher repulsive force, whereas when the loading weight decreases, the repulsive force returns to its original force.

Conventional air suspension has a complicated assembly process and a reduction in airtight performance because individual components are bonded by welding in different manners when manufacturing a top port coupled to a piston rod of a damper. Therefore, there is a need to address such an issue.

The related art of the present disclosure is disclosed in Korean Patent No. 10-1327048 (published on November 1, 2013, entitled "AIR SPRING FOR VEHICLE"). US 2004/119212 A1 relates to an air spring whose cover has an additional volume and a method for making the air spring. WO 2016/110357 A1 relates to a composite component and an air spring component.

The invention is defined by independent claim 1. Further embodiments of the invention are defined by the dependent claims. This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Various embodiments are directed to a top port apparatus for air suspension with improved airtightness and durability.

In an example not according to the claimed invention, a top port apparatus for air suspension may include a top casing connected to a vehicle body, a bottom casing disposed to face the top casing and connected to an air spring, and a sealing section configured to seal a gap between the top casing and the bottom casing.

The top casing may include a top casing body, and a first extension part protruding outward from the top casing body. The bottom casing may include a bottom casing body coupled to the top casing body, and a second extension part protruding outward from the bottom casing body and disposed to face the first extension part.

The sealing section may include an elastic member disposed between the first extension part and the second extension part, and a cover part disposed to face the elastic member and surround the first extension part and the second extension part.

The cover part may have both ends that are deformed by press working and pressed to respective outer surfaces of the first second extension part and the second extension part.

The sealing section may further include a guide member that is provided between at least one of the first second extension part or the second extension part and the cover part, and guides deformation of the cover part.

According to the claimed invention, a top port apparatus for air suspension includes: a middle casing, a top casing coupled to an upper side of the middle casing and connected to a vehicle body, a bottom casing coupled to a lower side of the middle casing and connected to an air spring, and a sealing section configured to seal a gap among the middle casing, the top casing, and the bottom casing.

The middle casing includes a middle casing body disposed between the top casing and the bottom casing and having a valve chamber, and a seating part protruding outward from the middle casing body and extending along a circumferential surface of the middle casing body.

The top casing includes a top casing body having a first chamber connecting with the valve chamber, and a first extension part protruding outward from the top casing body and seated on an upper side of the seating part. The bottom casing includes a bottom casing body having a second chamber and a third chamber connecting with the valve chamber, and a second extension part protruding outward from the bottom casing body and seated on a lower side of the seating part.

The first extension part and the second extension part may each have a stepped cross-section.

The first extension part and the second extension part may have ends that are spaced apart from and face each other.

The sealing section may include an elastic member disposed between the first second extension part and the second extension part, and a cover part disposed to face the elastic member and surround the first extension part and the second extension part.

The cover part may have both ends that are deformed by press working and pressed to respective outer surfaces of the first second extension part and the second extension part.

The sealing section may further include a guide member that is provided between at least one of the first second extension part or the second extension part and the cover part, and guides deformation of the cover part.

The guide member may gradually decrease in cross-sectional area as it is directed to the cover part.

The guide member may be formed to be elastically deformable.

As apparent from the above description, the top port apparatus for air suspension according to the present disclosure can simplify the assembly process and reduce costs to manufacture as the middle casing, the top casing, and the bottom casing are vertically stacked and coupled to each other.

In addition, the top port apparatus for air suspension according to the present disclosure can double-block foreign substances from entering the middle casing, the top casing, and the bottom casing or air from leaking out of the middle casing, the top casing, and the bottom casing, by the stepped contact structure of the seating part and the first and second extension parts, and the sealing section.

Moreover, the top port apparatus for air suspension according to the present disclosure can enhance the coupling force among the middle casing, the top casing, and the bottom casing by the cover part, and maintain the close contact of the elastic member with the first extension part and the second extension part.

Furthermore, the top port apparatus for air suspension according to the present disclosure can block direct exposure of the elastic member to the outside by the cover part, thereby enhancing overall sealing performance of the sealing suction and preventing damage to the elastic member.

### BRIEF DESCRIPTION OF THE DRAWINGS

FIG. 1 is a perspective view schematically illustrating a configuration of a top port apparatus for air suspension according to an example, which is not according to the claimed invention.
FIG. 2 is a cross-sectional view schematically illustrating the configuration of the top port apparatus for air suspension according the example, which is not according to the claimed invention.
FIG. 3 is an enlarged view schematically illustrating the configuration of the sealing section according the example, which is not according to the claimed invention.
FIGS. 4 to 7 are views schematically illustrating the process of assembling the top port apparatus for air suspension according to the example not according to the claimed invention.
FIG. 8 is a perspective view schematically illustrating a configuration of a top port apparatus for air suspension according to an embodiment of the claimed invention.
FIG. 9 is a cross-sectional view schematically illustrating the configuration of the top port apparatus for air suspension according to the embodiment of the claimed invention.
FIG. 10 is an enlarged view schematically illustrating the configuration of the sealing section according to the embodiment of the embodiment of the claimed invention.
FIGS. 11 to 14 are views schematically illustrating the process of assembling the top port apparatus for air suspension according to the embodiment of the claimed invention.

### DETAILED DESCRIPTION OF THE ILLUSTRATED EMBODIMENTS

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present invention will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

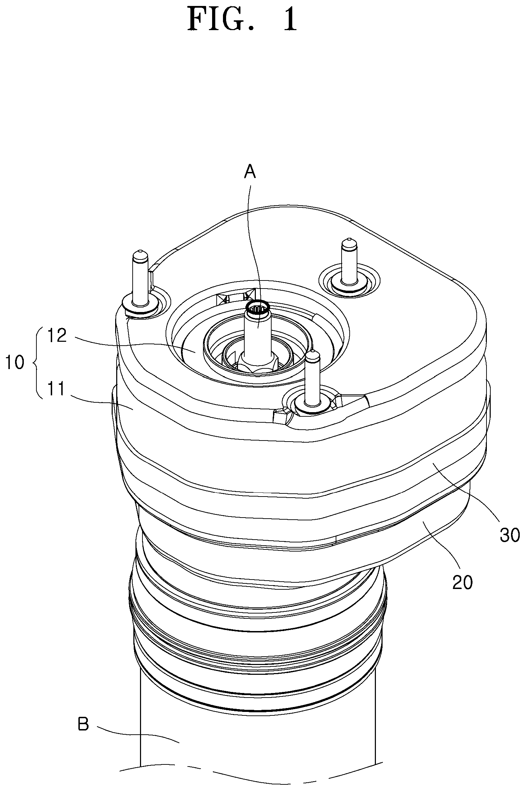

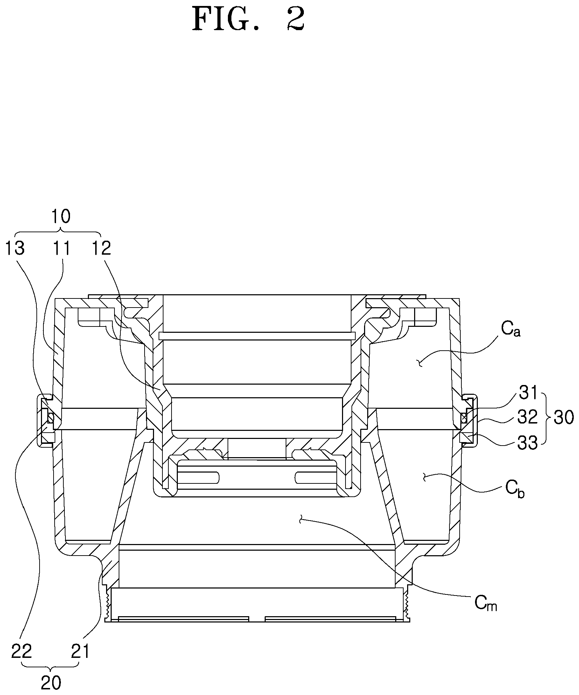

FIG. 1 is a perspective view schematically illustrating a configuration of a top port apparatus for air suspension according to an unclaimed example of the present disclosure. FIG. 2 is a cross-sectional view schematically illustrating the configuration of the top port apparatus for air suspension according to the first embodiment of the present disclosure.

Referring to FIGS. 1 and 2, the top port apparatus for air suspension according to the present example is configured to connect a vehicle body to a piston rod A of a shock absorber coupled with an axle and to adjust an air pressure within an air spring B, and includes a top casing 10, a bottom casing 20, and a sealing section 30.

The top casing 10 defines an upper appearance of the top port apparatus for air suspension and is connected to the vehicle body. That is, the top casing 10 functions to support the top port apparatus for air suspension as a whole with respect to the vehicle body.

The top casing 10 according to the present unclaimed example may include a top casing body 11, a rod mount 12, and a first extension part 13.

The top casing body 11 may have a cylindrical shape with an outer circumference forming a closed curve. The top casing body 11 may be made of a synthetic resin material and manufactured by injection molding. The top casing body 11 may have an upper surface detachably connected to the vehicle body by bolting or the like. The bottom of the top casing body 11 is coupled to the top of the bottom casing 20 to be described later. In this case, the bottom of the top casing body 11 may be integrally bonded to the top of the bottom casing body 20 with adhesive or the like. The top casing body 11 may have an upper chamber Ca, which is defined therein and filled with air. The upper chamber Ca may pass through the lower surface of the top casing body 11.

The rod mount 12 is coupled to the top casing body 11 and supports the piston rod A. That is, the rod mount 12 functions to connect the piston rod A to the vehicle body via the top casing body 11. The rod mount 12 according to the present embodiment may have a cup shape with open upper and lower sides. The rod mount 12 may be made of a metal material such as aluminum. The rod mount 12 may be integrally coupled to the top casing body 11 by insert injection or the like. The rod mount 12 may have a bottom protruding into the top casing body 11. The top of the piston rod A may be inserted into the rod mount 12 through the bottom of the rod mount 12. The top of the piston rod A may be detachably fixed to the rod mount 12 by bolting or the like.

The first extension part 13 protrudes outward from the top casing body 11. The first extension part 13 according to the present unclaimed example may protrude from the outer surface of the top casing body 11 in a direction perpendicular to the piston rod A. The first extension part 13 may be made of the same material as the top casing body 11. The first extension part 13 may continuously extend along the circumferential surface of the top casing body 11 to have a substantially ring shape. The first extension part 13 may have a stepped cross-section.

The bottom casing 20 is disposed to face the top casing 10 and defines a lower appearance of the top port apparatus for air suspension. The bottom casing 20 is connected to the air spring B, and functions to allow air to be transferred between the top port apparatus for air suspension and the air spring B.

The bottom casing 20 according to the present unclaimed example includes a bottom casing body 21 and a second extension part 22.

The bottom casing body 21 may have a cylindrical shape with an outer circumference forming a closed curve. The bottom casing body 21 may be made of a synthetic resin material and manufactured by injection molding. The top of the bottom casing body 21 may be coupled to the bottom of the top casing body 11. In this case, the top of the bottom casing body 21 may be integrally bonded to the bottom of the top casing body 11 with adhesive or the like. The bottom of the bottom casing body 21 may be coupled to the top of the air spring B.

The bottom casing body 310 may have therein a lower chamber Cb, which is filled with air and communicates with the upper chamber Ca, and a main chamber Cm, which is partitioned from the lower chamber Cb and communicates with the air spring B. The lower chamber Cb may communicate with the upper chamber Ca as the top casing body 11 is coupled to the bottom casing body 12. The upper chamber Ca or the lower chamber Cb may be supplied with air via a nozzle (not shown) or the like from the outside. A valve (not shown) may be further installed between the lower chamber Cb and the main chamber Cm to allow air to be transferred between the lower chamber Cb and the main chamber Cm.

The second extension part 22 protrudes outward from the bottom casing body 21. The second extension part 22 according to the present unclaimed example may protrude from the outer surface of the bottom casing body 21 in a direction perpendicular to the piston rod A. The second extension part 22 may be made of the same material as the bottom casing body 21. The second extension part 22 may continuously extend along the circumferential surface of the bottom casing body 21 to have a substantially ring shape. The upper surface of the second extension part 22 is seated on the lower surface of the first extension part 13. The second extension part 22 may have a stepped cross-section corresponding to the cross-section of the first extension part 13. Accordingly, the first and second extension parts 13 and 22 may form a structure in which they come into close contact with each other in a stepwise manner, thereby preventing foreign substances from entering or air from leaking between the top casing body 11 and the bottom casing body 21 together with the sealing section 30 to be described later.

The sealing section 30 seals a gap between the top casing 10 and the bottom casing 20. That is, the sealing section 30 functions to prevent foreign substances from entering or air from leaking into the gap between the top casing 10 and the bottom casing 20.

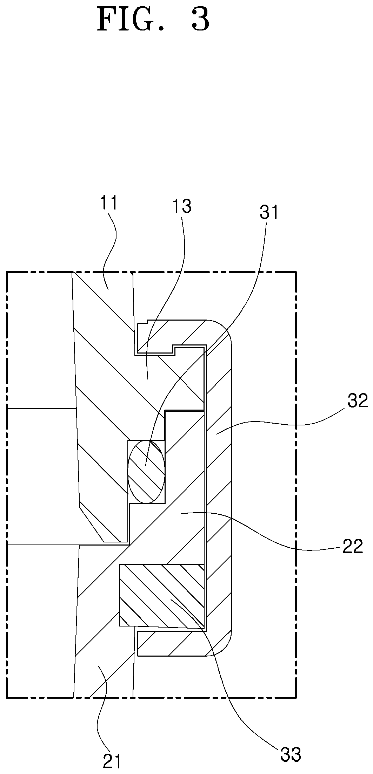

FIG. 3 is an enlarged view schematically illustrating the configuration of the sealing section according to the unclaimed example.

Referring to FIGS. 1 to 3, the sealing section 30 according to the present unclaimed example includes an elastic member 31 and a cover part 32.

The elastic member 31 is disposed between the first extension part 13 and the second extension part 22. The elastic member 31 according to the present unclaimed example may have a substantially ring shape. The elastic member 31 may be disposed between the lower surface of the first extension part 13 and the upper surface of the second extension part 22. The elastic member 31 may be made of an elastically deformable material such as rubber or silicon. The elastic member 31 may have a height greater than the distance between the first extension part 13 and the second extension part 22. Accordingly, the respective upper and lower surfaces of the elastic member 31 may be tightly pressed against the lower surface of the end of the first extension part 13 and the upper surface of the end of the second extension part 22 by elastic deformation.

The cover part 32 is disposed to face the elastic member 31 and surround the first extension part 13 and the second extension part 22. That is, the cover part 32 is coupled to the first extension part 13 and the second extension part 22 to enhance the coupling force between the top casing 10 and the bottom casing 20, and functions to maintain the close contact of the elastic member 31 with the first extension part 13 and the second extension part 22. In addition, the cover part 32 may block direct exposure of the elastic member 31 to the outside, thereby enhancing overall sealing performance of the sealing section 30 and preventing damage to the elastic member 31.

The cover part 32 according to the present is unclaimed example may have a hollow ring shape with open upper and lower sides. The inner surface of the cover part 32 may surround the circumferential surfaces of the ends of the first and second extension parts 13 and 22 and may be disposed to face the elastic member 31. Depending on the shape of the first or second extension part 13 or 22, the cover part 32 may be disposed to face the elastic member with the first or second extension part 13 or 22 interposed therebetween or to directly face the elastic member 31.

The cover part 32 may have a vertical height greater than the length between the top of the first extension part 13 and the bottom of the second extension part 22. Accordingly, the cover part 32 may have both upper and lower ends that protrude upward from the first extension part 13 and downward from the second extension part 22, respectively, in a state in which the inner surface of the cover part 32 faces the circumferential surfaces of the ends of the first and second extension parts 13 and 22. In this state, the upper and lower ends of the cover part 32 may be deformed by press working and pressed and fixed to the outer surfaces of the first and second extension parts 13 and 22. The cover part 32 may be made of a metal material such as aluminum or steel so that it is variable in shape by press working while securing sufficient rigidity.

The sealing section 30 according to the present unclaimed example may further include a guide member 33.

The guide member 33 is provided between at least one of the first and second extension parts 13 and 22 and the cover part 32 and guides deformation of the cover part 32 by press working. More specifically, the guide member 33 supports the inner surface of the cover part 32 during press working of the cover part 32 to guide the end of the cover part 32 to be deformed into a predetermined shape, and at the same time functions to distribute the pressurized load applied to the end of the cover part 32. Accordingly, the guide member 33 can prevent the end of the cover part 32 from being deformed and broken at an excessive angle, and prevent the pressurized load applied to the end of the cover part 32 from being concentrated locally.

An example in which the guide member 33 is provided between the second extension part 22 and the cover part 32 will be described below. However, the present disclosure is not limited thereto. For example, the guide member 33 may be provided between the first extension part 13 and the cover part 32, or may consist of a plurality of guide members, which are provided between the first extension part 13 and the cover part 32 and between the second extension part 22 and the cover part 32, respectively.

The guide member 33 according to the present unclaimed example may have a hollow ring shape with open upper and lower ends. The guide member 33 may be disposed such that its inner surface is in contact with the outer surface of the bottom casing body 21 and its upper surface is in contact with the lower surface of the second extension part 22. The guide member 33 may be fixed to the bottom casing body 21 or the second extension part 22 by welding, adhesive, or the like. The guide member 33 may be made of an elastically deformable material such as rubber, silicon, or synthetic resin.

Hereinafter, a process of assembling the top port apparatus for air suspension according to the unclaimed example will be described in detail.

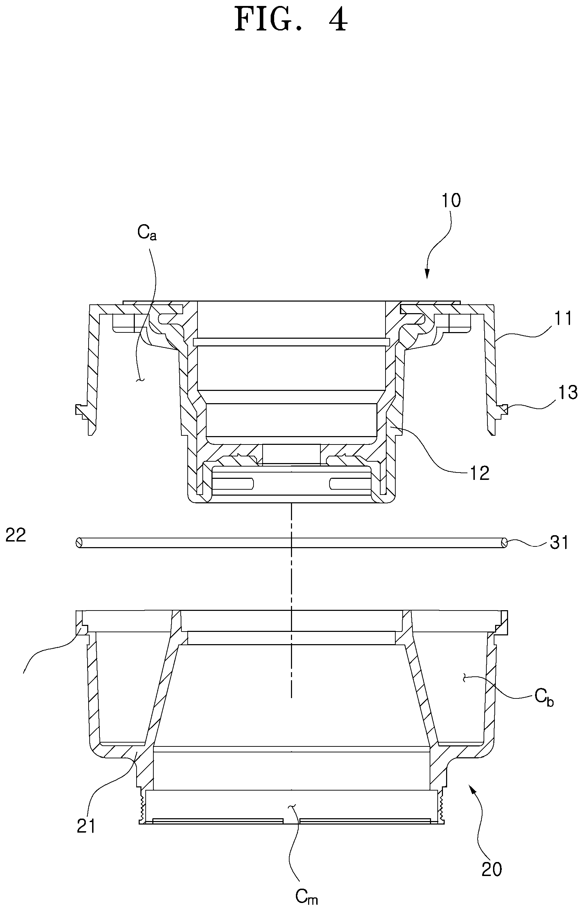

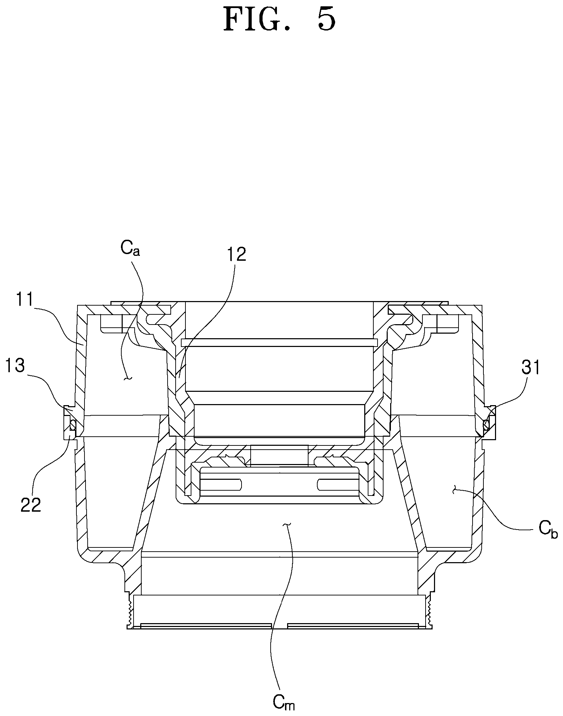

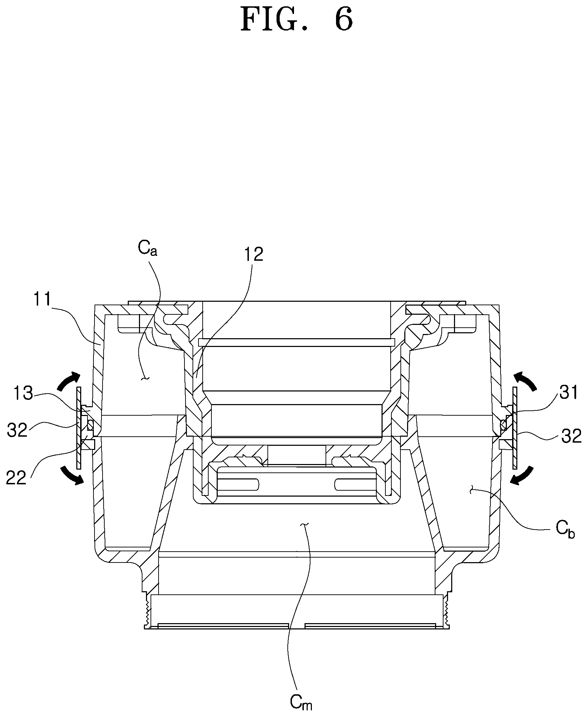

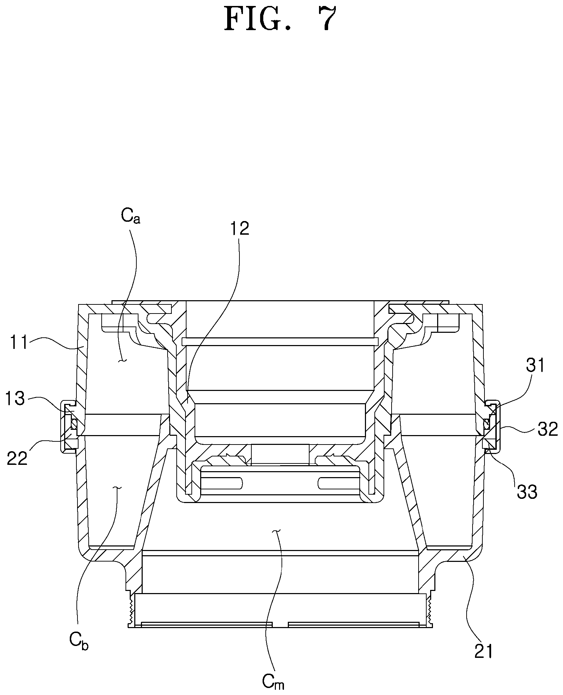

FIGS. 4 to 7 are views schematically illustrating the process of assembling the top port apparatus for air suspension according to the unclaimed example.

Referring to FIGS. 4 to 7, the top casing body 11 and the bottom casing body 21 may be disposed such that their respective lower and upper surfaces, which are opened by the respective upper chamber Ca and lower chamber Cb, face each other vertically.

Subsequently, the top casing body 11 and the bottom casing body 21 move in close proximity to each other, so the bottom of the top casing body 11 comes into contact with the top of the bottom casing body 21.

The bottom of the top casing body 11 and the top of the bottom casing body 21 that are in contact with each other may be integrally coupled to each other with adhesive or the like.

In this case, as the bottom of the top casing body 11 comes into contact with the top of the bottom casing body 21 with the elastic member 31 being disposed between the top casing body 11 and the bottom casing body 21, both upper and lower surfaces of the elastic member 31 may be tightly pressed and fixed to the lower surface of the first extension part 13 and the upper surface of the second extension part 22, respectively.

Subsequently, the inner surface of the cover part 32 is disposed to face the circumferential surfaces of the ends of the first and second extension parts 13 and 22.

The upper and lower ends of the cover part 32 are formed by press working, and pressed and fixed to the outer surfaces of the first and second extension parts 13 and 22.

More specifically, the upper end of the cover part 32 is deformed in a direction in which its inner surface is directed toward the outer surface of the first extension part 13 by the pressing force applied from a press tool (not shown) or the like, so that the upper end of the cover part 420 is pressed and fixed to the outer surface of the first extension part 13.

The lower end of the cover part 32 is deformed in a direction in which its inner surface is directed toward the outer surface of the second extension part 22 by the pressing force applied from the press tool or the like.

As the lower end of the cover part 32 is deformed at a predetermined angle or more, the inner surface of the cover part 32 may come into contact the outer surface of the guide member 33. The lower end of the cover part 32 may then be deformed into a shape corresponding to the shape of the guide member 33, and pressed and fixed to the outer surfaces of the guide member 33.

Hereinafter, a top port apparatus for air suspension according to an embodiment of the claimed invention.

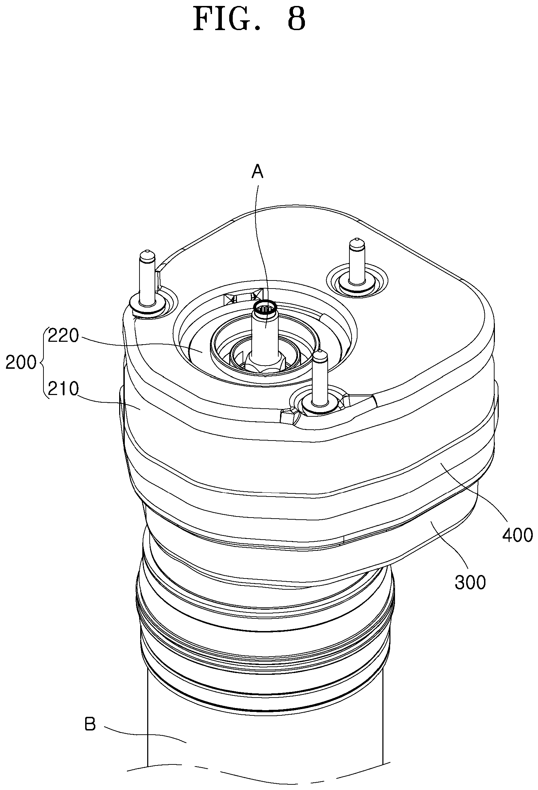

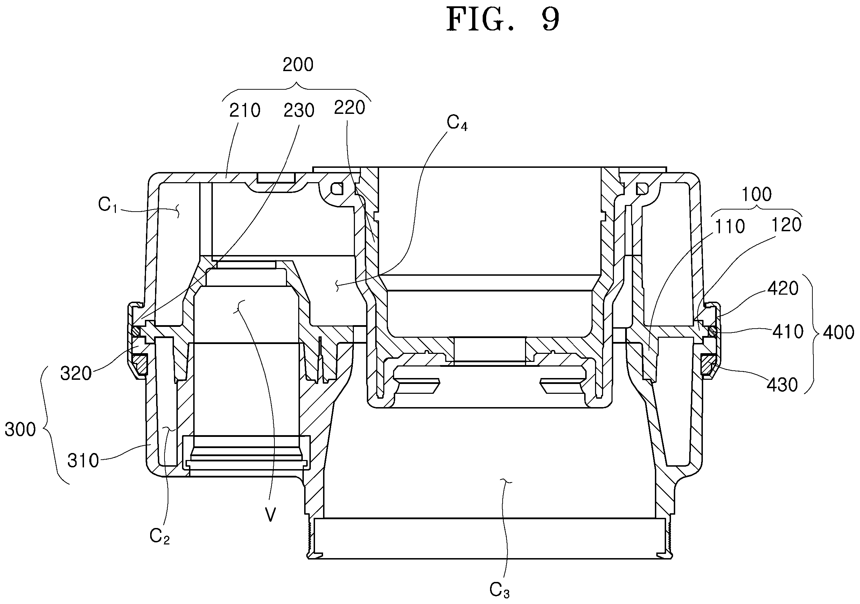

FIG. 8 is a perspective view schematically illustrating a configuration of a top port apparatus for air suspension according to an embodiment of the claimed invention. FIG. 9 is a cross-sectional view schematically illustrating the configuration of the top port apparatus for air suspension according to the embodiment of the claimed invention.

Referring to FIGS. 8 and 9, the top port apparatus for air suspension, which is designated by reference numeral 1, according to the embodiment of the present invention is configured to connect a vehicle body to a piston rod A of a shock absorber coupled with an axle and to adjust an air pressure within an air spring B, and may include a middle casing 100, a top casing 200, a bottom casing 300, and sealing section 400.

Since the piston rod A and the air spring B correspond to well-known components in a typical air suspension structure, a detailed description thereof will be omitted.

The middle casing 100 is disposed between the vehicle body and the air spring B, and interconnects the top casing 200 and the bottom casing 300.

The middle casing 100 according to the embodiment of the present invention includes a middle casing body 110 and a seating part 120.

The middle casing body 110 defines a schematic external appearance of the middle casing 100 and is disposed between the top casing 200 and the bottom casing 300. The middle casing body 110 according to the embodiment of the present invention may have a cylindrical shape with an outer circumference forming a closed curve. The cross-section of the middle casing body 110 perpendicular to the piston rod A may be asymmetrical. The middle casing body 110 may be made of a synthetic resin material and manufactured by injection molding. The middle casing body 110 has therein a valve chamber V in which a solenoid valve (not shown) may be installed to control the connection between a first chamber C1, a second chamber C2, and a third chamber C3, which will be described later, so that the stiffness of the air spring B is variable.

The seating part 120 protrudes outward from the middle casing body 110 and supports a first extension part 230 and a second extension part 320 which will be described later. The seating part 120 according to the embodiment of the present invention protrudes from the outer surface of the middle casing body 110 preferably in a direction perpendicular to the piston rod A. The seating part 120 may be made of the same material as the middle casing body 110. The seating part 120 extends along the circumferential surface of the middle casing body 110 preferably to have a substantially ring shape. The seating part 120 may have a stepped cross-section in which its height gradually increases toward the end thereof.

The top casing 200 is coupled to the top of the middle casing 100 and connected to the vehicle body. That is, the top casing 200 functions to support the top port apparatus for air suspension 1 according to the embodiment of the present invention as a whole with respect to the vehicle body.

The top casing 200 according to the embodiment of the present invention includes a top casing body 210, preferably a rod mount 220, and a first extension part 230.

The top casing body 210 defines a schematic external appearance of the top casing 200 and is disposed above the middle casing body 110. The top casing body 210 according to the embodiment of the present invention may have a cylindrical shape with an outer circumference forming a closed curve. The cross-section of the top casing body 210 perpendicular to the piston rod A may be asymmetrical, more specifically, may have a shape corresponding to the cross-section of the middle casing body 110. The top casing body 210 may be made of a synthetic resin material and manufactured by injection molding. The top casing body 210 has an upper surface detachably connected to the vehicle body by bolting or the like. The bottom of the top casing body 210 is coupled to the top of the middle casing body 110. In this case, the bottom of the top casing body 210 may be integrally bonded to the top of the middle casing body 110 with adhesive or the like. The top casing body 21 has therein a first chamber C1, which is filled with air and connects with the valve chamber V, and preferably a fourth chamber C4, which is partitioned from the first chamber C1 and connects with the valve chamber V and a third chamber C3 to be described later.

The rod mount 220 is coupled to the top casing body 210 and supports the piston rod A. That is, the rod mount 220 functions to connect the piston rod A to the vehicle body via the top casing body 210. The rod mount 220 according to the embodiment of the present invention may have a cup shape with open upper and lower sides. The rod mount 220 may be made of a metal material such as aluminum. The rod mount 220 may be integrally coupled to the top casing body 210 by insert injection or the like. The rod mount 220 has a bottom protruding into the top casing body 210. The top of the piston rod A is inserted into the rod mount 220 through the bottom of the rod mount 220. The top of the piston rod A may be detachably fixed to the rod mount 220 by bolting or the like.

The first extension part 230 protrudes outward from the top casing body 210 and is seated on the upper side of the seating part 120. The first extension part 230 according to the embodiment of the present invention protrudes from the outer surface of the top casing body 210 preferably in a direction perpendicular to the piston rod A. The first extension part 230 may be made of the same material as the top casing body 210. The first extension part 230 may continuously extend along the circumferential surface of the top casing body 210 to have a substantially ring shape. The lower surface of the first extension part 230 is seated on the upper surface of the seating part 120. The first extension part 230 may have a stepped cross-section in which its height gradually decreases toward the end thereof so as to correspond to the cross-section of the seating part 120. Accordingly, the first extension part 230 and the seating part 120 may form a structure in which they come into close contact with each other in a stepwise manner, thereby preventing foreign substances from entering or air from leaking between the middle casing body 110 and the top casing body 210 together with the sealing section 400.

The bottom casing 300 is coupled to the bottom of the middle casing 100 and connected to the air spring B. That is, the bottom casing 300 functions to allow air to be transferred between the air spring B and the top port apparatus for air suspension 1 according to the embodiment of the present invention.

The bottom casing 300 according to the embodiment of the present invention includes a bottom casing body 310 and a second extension part 320.

The bottom casing body 310 defines a schematic external appearance of the bottom casing 300 and is disposed beneath the middle casing body 110. The bottom casing body 310 according to the embodiment of the present invention may have a cylindrical shape with an outer circumference forming a closed curve. The cross-section of the bottom casing body 310 perpendicular to the piston rod A may be asymmetrical, more specifically, may have a shape corresponding to the cross-section of the middle casing body 110. The bottom casing body 310 may be made of a synthetic resin material and manufactured by injection molding. The top of the bottom casing body 310 is coupled to the bottom of the middle casing body 110. In this case, the top of the bottom casing body 310 may be integrally bonded to the bottom of the middle casing body 110 with an adhesive or the like. The bottom of the bottom casing body 310 is coupled to the top of the air spring B. The bottom casing body 310 has therein a second chamber C2, which is filled with air and connects with the valve chamber V, and a third chamber C3, which is partitioned from the second chamber C2 and preferably connects with the fourth chamber C4 and the air spring B.

The second extension part 320 protrudes outward from the bottom casing body 310 and is seated on the lower side of the seating part 120. The second extension part 320 according to the embodiment of the present invention protrudes from the outer surface of the bottom casing body 310 preferably in a direction perpendicular to the piston rod A. The second extension part 320 may be made of the same material as the bottom casing body 310. The second extension part 320 may continuously extend along the circumferential surface of the bottom casing body 310 to have a substantially ring shape. The upper surface of the second extension part 320 is seated on the lower surface of the seating part 120. The second extension part 320 may have a stepped cross-section in which its height gradually decreases toward the end thereof so as to correspond to the cross-section of the seating part 120. Accordingly, the second extension part 320 and the seating part 120 may form a structure in which they come into close contact with each other in a stepwise manner, thereby preventing foreign substances from entering or air from leaking between the middle casing body 110 and the bottom casing body 310 together with the sealing section 400. The upper surface of the end of the second extension part 320 is spaced apart from and disposed to face the lower surface of the end of the first extension part 230. Accordingly, a space in which an elastic member 410 to be described later is installed may be provided between the ends of the first and second extension parts 230 and 320.

The sealing section 400 seals a gap among the middle casing 100, the top casing 200, and the bottom casing 300. That is, the sealing section 400 functions to prevent foreign substances from entering or air from leaking into the gap among the middle casing 100, the top casing 200, and the bottom casing 300.

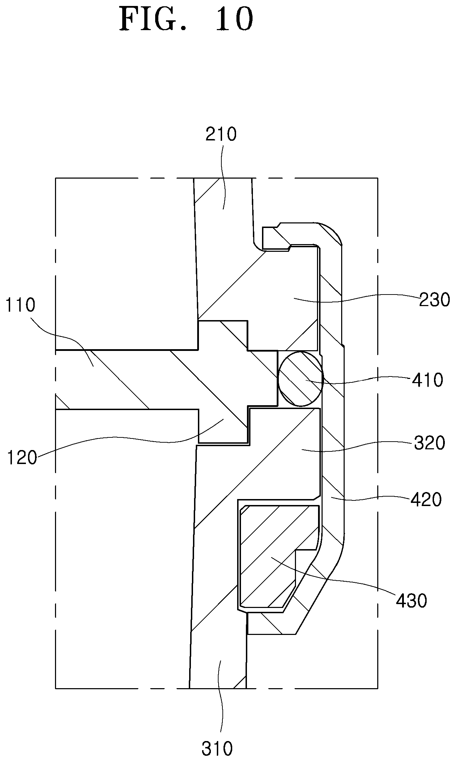

FIG. 10 is an enlarged view schematically illustrating the configuration of the sealing section according to the embodiment of the claimed invention.

Referring to FIGS. 8 to 10, the sealing section 400 according to the embodiment of the present invention may include an elastic member 410, a cover part 420.

The elastic member 410 is disposed between the ends of the first and second extension parts 230 and 320. The elastic member 410 according to the embodiment of the present invention may have a substantially ring shape. The elastic member 410 is disposed between the lower surface of the end of the first extension part 230 and the upper surface of the end of the second extension part 320. The elastic member 410 may be made of an elastically deformable material such as rubber or silicon. The elastic member 410 has a height greater than the distance between the first extension part 230 and the second extension part 320. Accordingly, the respective upper and lower surfaces of the elastic member 410 may be tightly pressed against the lower surface of the end of the first extension part 230 and the upper surface of the end of the second extension part 320 by elastic deformation.

The cover part 420 is disposed to face the elastic member 410 and surround the first extension part 230 and the second extension part 320. That is, the cover part 420 is coupled to the first extension part 230 and the second extension part 320 to enhance the coupling force among the middle casing 100, the top casing 200, and the bottom casing 300, and functions to maintain the close contact of the elastic member 410 with the first extension part 230 and the second extension part 320. In addition, the cover part 420 may block direct exposure of the elastic member 410 to the outside, thereby enhancing overall sealing performance of the sealing section 400 and preventing damage to the elastic member 410. The cover part 420 according to the embodiment of the present invention may have a hollow ring shape with open upper and lower sides. The inner surface of the cover part 420 surrounds the circumferential surfaces of the ends of the first and second extension parts 230 and 320 and is disposed to face the elastic member 410. The cover part 420 has a vertical height greater than the length between the top of the first extension part 230 and the bottom of the second extension part 320. Accordingly, the cover part 420 may have both upper and lower ends that protrude upward from the first extension part 230 and downward from the second extension part 320, respectively, in a state in which the inner surface of the cover part 420 faces the circumferential surfaces of the ends of the first and second extension parts 230 and 320. The upper and lower ends of the cover part 420 may be deformed by press working and pressed and fixed to the outer surfaces of the first and second extension parts 230 and 320. The cover part 420 may be made of a metal material such as aluminum or steel so that it is variable in shape by press working while securing sufficient rigidity.

The sealing section 400 according to the present embodiment may further include a guide member 430.

The guide member 430 is provided between at least one of the first and second extension parts 230 and 320 and the cover part 420 and guides deformation of the cover part 420 by press working. More specifically, the guide member 430 supports the inner surface of the cover part 420 during press working of the cover part 420 to guide the end of the cover part 420 to be deformed into a predetermined shape, and at the same time functions to distribute the pressurized load applied to the end of the cover part 420. Accordingly, the guide member 430 can prevent the end of the cover part 420 from being deformed and broken at an excessive angle, and prevent the pressurized load applied to the end of the cover part 420 from being concentrated locally.

An example in which the guide member 430 is provided between the second extension part 320 and the cover part 420 will be described below. However, the present disclosure is not limited thereto. For example, the guide member 430 may be provided between the first extension part 230 and the cover part 420, or may consist of a plurality of guide members, which are provided between the first extension part 230 and the cover part 420 and between the second extension part 320 and the cover part 420, respectively.

The guide member 430 according to the present embodiment may have a hollow ring shape with open upper and lower ends. The guide member 430 is disposed such that its inner surface is in contact with the outer surface of the bottom casing body 310 and its upper surface is in contact with the lower surface of the second extension part 320. The guide member 430 may be fixed to the bottom casing body 310 or the second extension part 320 by welding, adhesive, or the like. The guide member 430 may have a cross-sectional shape in which its cross-sectional area gradually decreases as the guide member 430 is directed to cover part, for example, as shown in FIG 10, directed downward. The guide member 430 may be made of an elastically deformable material such as rubber, silicon, or synthetic resin.

Hereinafter, a process of assembling the top port apparatus for air suspension 1 according to the embodiment of the present invention will be described in detail.

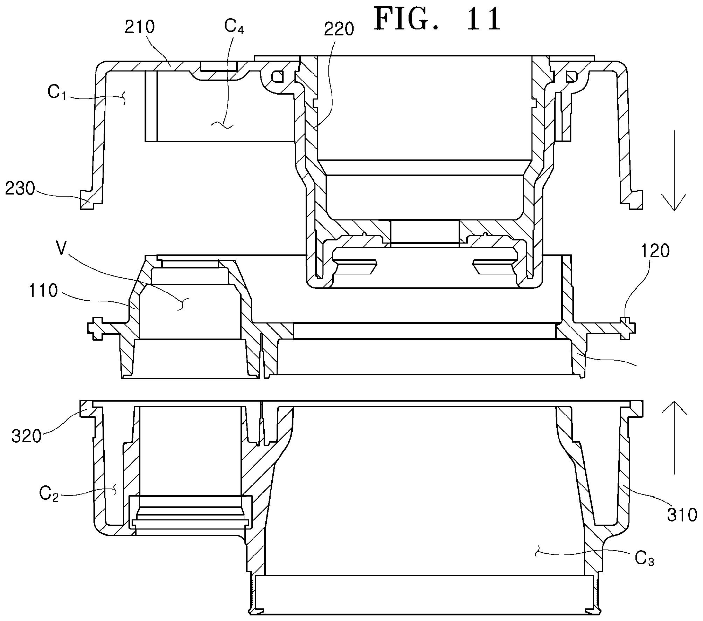

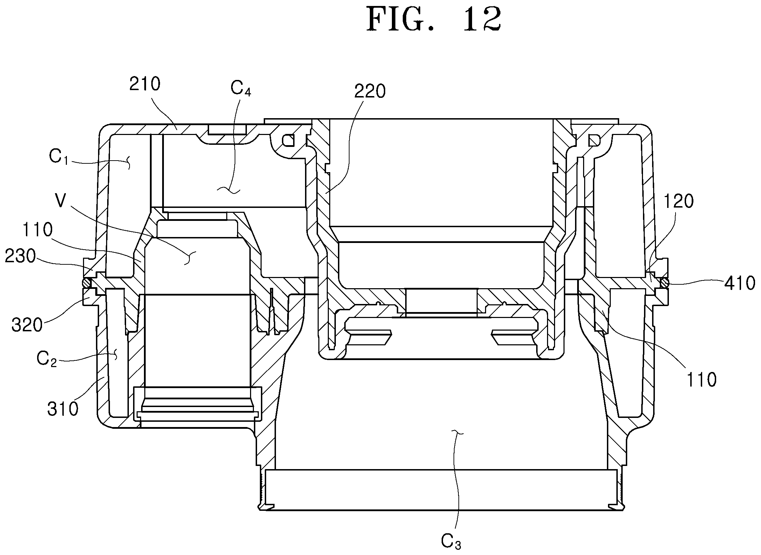

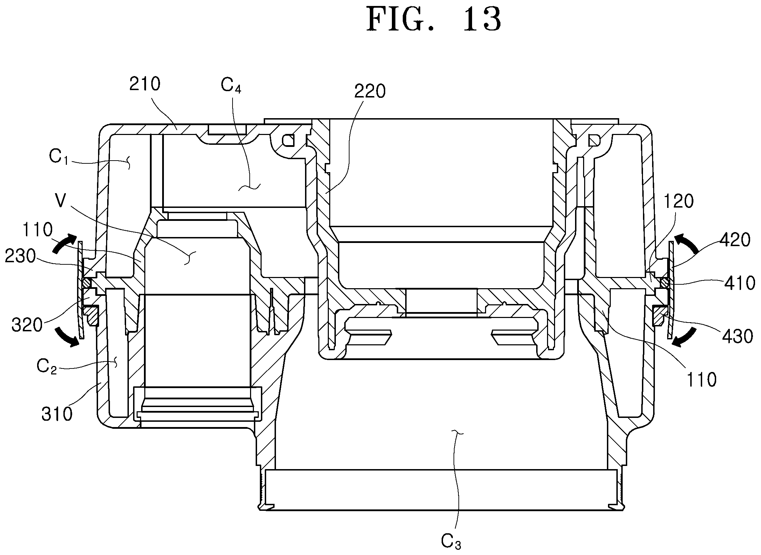

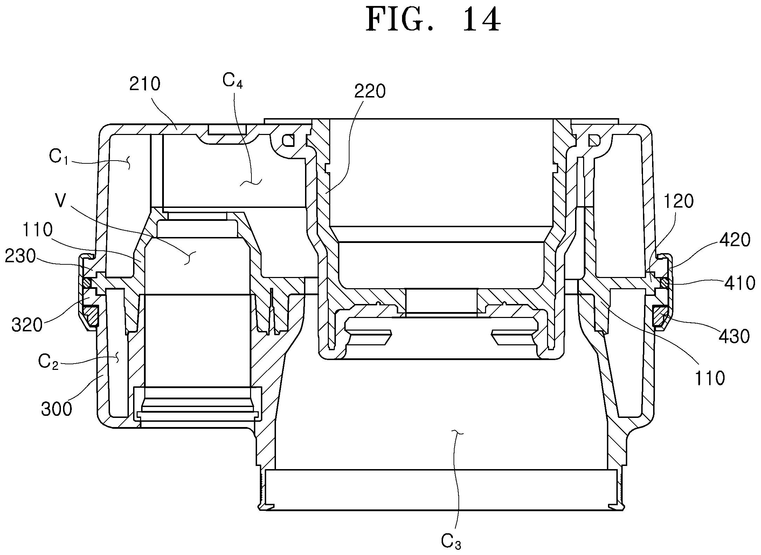

FIGS. 11 to 14 are views schematically illustrating the process of assembling the top port apparatus for air suspension according to the embodiment of the claimed invention.

Referring to FIGS. 11 to 14, the top casing body 210 moves downward toward the middle casing body 110 in the state in which it is disposed above the middle casing body 110.

As the top casing body 210 moves downward by a predetermined distance or more, the bottom of the top casing body 210 comes into contact with the top of the middle casing body 110.

The top of the middle casing body 110 and the bottom of the top casing body 210 that are in contact with each other are integrally coupled to each other with adhesive or the like.

In addition, the bottom casing body 310 moves upward toward the middle casing body 110 in the state in which it is disposed beneath the middle casing body 110.

As the bottom casing body 310 moves upward by a predetermined distance or more, the top of the bottom casing body 310 comes into contact with the bottom of the middle casing body 110.

The bottom of the middle casing body 110 and the top of the bottom casing body 310 that are in contact with each other are integrally coupled to each other with adhesive or the like.

As the middle casing body 110, the top casing body 210, and the bottom casing body 310 are coupled to each other, the lower surface of the end of the first extension part 230 and the upper surface of the end of the second extension part 320 are spaced apart from each other by a predetermined distance and face each other.

The elastic member 410 is inserted between the ends of the first and second extension parts 230 and 320. Both upper and lower surfaces of the elastic member 410 are pressed against the lower surface of the end of the first extension part 230 and the upper surface of the end of the second extension part 320, respectively.

Subsequently, the inner surface of the cover part 420 is disposed to face the circumferential surfaces of the ends of the first and second extension parts 230 and 320.

The upper and lower ends of the cover part 420 are formed by press working, and pressed and fixed to the outer surfaces of the first and second extension parts 230 and 320.

More specifically, the upper end of the cover part 420 is deformed in a direction in which its inner surface is directed toward the outer surface of the first extension part 230 by the pressing force applied from a press tool (not shown) or the like, so that the upper end of the cover part 420 is pressed and fixed to the outer surface of the first extension part 230.

The lower end of the cover part 420 is deformed in a direction in which its inner surface is directed toward the outer surface of the second extension part 320 by the pressing force applied from the press tool or the like.

As the lower end of the cover part 420 is deformed at a predetermined angle or more, the inner surface of the cover part 420 comes into contact the outer surface of the guide member 430. The lower end of the cover part 420 is then deformed into a shape corresponding to the shape of the guide member 430, and pressed and fixed to the outer surfaces of the second extension part 320 and the guide member 430.

While the present disclosure has been described with respect to the embodiments illustrated in the drawings, it will be obvious to those skilled in the art that such embodiments are provided by way of example only. It will be understood by those skilled in the art that various modifications and other equivalent embodiments may be made without departing from scope of the invention, which is defined by the following claims.

## Claims

1. A top port apparatus for air suspension, comprising:
a middle casing (100);
a top casing (200) coupled to an upper side of the middle casing (100) and configured to be connected to a vehicle body;
a bottom casing (300) coupled to a lower side of the middle casing (100) and configured to be connected to an air spring (B); and
a sealing section (400) configured to seal a gap among the middle casing (100), the top casing (200), and the bottom casing (300),
wherein the middle casing (100) comprises:
a middle casing body (110) disposed between the top casing (200) and the bottom casing (300) and having a valve chamber (V); and
a seating part (120) protruding outward from the middle casing body (110) and extending along a circumferential surface of the middle casing body (110),
wherein the top casing (200) comprises:
a top casing body (210) having a first chamber (C1) connecting with the valve chamber (V); and
a first extension part (230) protruding outward from the top casing body (210) and seated on an upper side of the seating part (120), and
wherein the bottom casing (300) comprises:
a bottom casing body (310) having a second chamber (C2) and a third chamber (C3) connecting with the valve chamber (V); and
a second extension part (320) protruding outward from the bottom casing body (310) and seated on a lower side of the seating part (120).

2. The top port apparatus for air suspension according to claim 1, wherein the first extension part (230) and the second extension part (320) each have a stepped cross-section.

3. The top port apparatus for air suspension according to claim 1 or 2, wherein the first extension part (230) and the second extension part (320) have ends that are spaced apart from and face each other.

4. The top port apparatus for air suspension according to any one of claims 1 to 3, wherein the sealing section (400) comprises:
an elastic member (410) disposed between the first extension part (230) and the second extension part (320); and
a cover part (420) disposed to face the elastic member (410) and surround the first extension part (230) and the second extension part (320).

5. The top port apparatus for air suspension according to claim 4, wherein the cover part (420) has both ends that are deformed by press working and pressed to respective outer surfaces of the first extension part (230) and the second extension part (320).

6. The top port apparatus for air suspension according to claim 5, wherein the sealing section (400) further comprises a guide member (430) that is provided between at least one of the first extension part (230) or the second extension part (320) and the cover part (420), and guides deformation of the cover part (420).

7. The top port apparatus for air suspension according to claim 6, wherein the guide member (430) gradually decreases in cross-sectional area as it is directed to the cover part (420).

8. The top port apparatus for air suspension according to claim 6, wherein the guide member (430) is formed to be elastically deformable.

## Patentansprüche

1. Obere Anschlussvorrichtung für eine Luftfederung, aufweisend:
ein mittleres Gehäuse (100);
ein oberes Gehäuse (200), das mit einer oberen Seite des mittleren Gehäuses (100) gekoppelt ist und konfiguriert ist, um mit einem Fahrzeugkörper verbunden zu werden;
ein unteres Gehäuse (300), das mit einer unteren Seite des mittleren Gehäuses (100) gekoppelt ist und konfiguriert ist, um mit einer Luftfeder (B) verbunden zu werden; und
einen Dichtungsabschnitt (400), der konfiguriert ist, um einen Spalt zwischen dem mittleren Gehäuse (100), dem oberen Gehäuse (200) und dem unteren Gehäuse (300) abzudichten,
wobei das mittlere Gehäuse (100) aufweist:
einen mittleren Gehäusekörper (110), der zwischen dem oberen Gehäuse (200) und dem unteren Gehäuse (300) angeordnet ist und eine Ventilkammer (V) hat; und
einen Anlageteil (120), der von dem mittleren Gehäusekörper (110) nach außen vorsteht und sich entlang einer Umfangsfläche des mittleren Gehäusekörpers (110) erstreckt,
wobei das obere Gehäuse (200) aufweist:
einen oberen Gehäusekörper (210) mit einer ersten Kammer (C1), die in Verbindung mit der Ventilkammer (V) steht; und
einen ersten Erweiterungsteil (230), der von dem oberen Gehäusekörper (210) nach außen vorsteht und an einer oberen Seite des Anlageteils (120) anliegt, und
wobei das untere Gehäuse (300) aufweist:
einen unteren Gehäusekörper (310) mit einer zweiten Kammer (C2) und einer dritten Kammer (C3), die in Verbindung mit der Ventilkammer (V) stehen; und
einen zweiten Erweiterungsteil (320), der von dem unteren Gehäusekörper (310) nach außen vorsteht und an einer unteren Seite des Anlageteils (120) anliegt.

2. Obere Anschlussvorrichtung für eine Luftfederung nach Anspruch 1, wobei der erste Erweiterungsteil (230) und der zweite Erweiterungsteil (320) jeweils einen gestuften Querschnitt haben.

3. Obere Anschlussvorrichtung für eine Luftfederung nach Anspruch 1 oder 2, wobei der erste Erweiterungsteil (230) und der zweite Erweiterungsteil (320) Enden haben, die voneinander beabstandet sind und sich gegenüberliegen.

4. Obere Anschlussvorrichtung für eine Luftfederung nach einem der Ansprüche 1 bis 3, wobei der Dichtungsabschnitt (400) aufweist:
ein elastisches Element (410), das zwischen dem ersten Erweiterungsteil (230) und dem zweiten Erweiterungsteil (320) angeordnet ist; und
einen Abdeckungsteil (420), der angeordnet ist, um dem elastischen Element (410) gegenüber zu liegen und den ersten Erweiterungsteil (230) und den zweiten Erweiterungsteil (320) zu umgeben.

5. Obere Anschlussvorrichtung für eine Luftfederung nach Anspruch 4, wobei der Abdeckungsteil (420) zwei Enden hat, die durch Pressen verformt sind und hin zu jeweiligen Außenflächen des ersten Erweiterungsteils (230) und des zweiten Erweiterungsteils (320) gepresst sind.

6. Obere Anschlussvorrichtung für eine Luftfederung nach Anspruch 5, wobei der Dichtungsabschnitt (400) ferner ein Führungselement (430) aufweist, das zwischen dem ersten Erweiterungsteil (230) und/oder dem zweiten Erweiterungsteil (320) einerseits und dem Abdeckungsteil (420) andererseits bereitgestellt ist und Verformung des Abdeckungsteils (420) führt.

7. Obere Anschlussvorrichtung für eine Luftfederung nach Anspruch 6, wobei das Führungselement (430), während es zu dem Abdeckungsteil (420) gerichtet wird, seine Querschnittsfläche allmählich verringert.

8. Obere Anschlussvorrichtung für eine Luftfederung nach Anspruch 6, wobei das Führungselement (430) gebildet ist, um elastisch verformbar zu sein.

## Revendications

1. Appareil à orifice supérieur pour suspension pneumatique, comprenant:
un carter intermédiaire (100);
un carter supérieur (200) couplé à un côté supérieur du carter intermédiaire (100) et configuré pour être relié à une carrosserie de véhicule;
un carter inférieur (300) couplé à un côté inférieur du carter intermédiaire (100) et configuré pour être relié à un ressort pneumatique (B); et
une section d'étanchéité (400) configurée pour sceller un espace parmi le carter intermédiaire (100), le carter supérieur (200) et le carter inférieur (300),
dans lequel le carter intermédiaire (100) comprend:
un corps de carter intermédiaire (110) disposé entre le carter supérieur (200) et le carter inférieur (300) et ayant une chambre de soupape (V); et
une partie d'assise (120) faisant saillie vers l'extérieur depuis le corps de carter intermédiaire (110) et s'étendant le long d'une surface circonférentielle du corps de carter intermédiaire (110),
dans lequel le carter supérieur (200) comprend:
un corps de carter supérieur (210) ayant une première chambre (C1) communiquant avec la chambre de soupape (V); et
une première partie d'extension (230) faisant saillie vers l'extérieur depuis le corps de carter supérieur (210) et reposant sur un côté supérieur de la partie d'assise (120), et
dans lequel le carter inférieur (300) comprend:
un corps de carter inférieur (310) ayant une deuxième chambre (C2) et une troisième chambre (C3) communiquant avec la chambre de soupape (V); et
une deuxième partie d'extension (320) faisant saillie vers l'extérieur depuis le corps de carter inférieur (310) et reposant sur un côté inférieur de la partie d'assise (120).

2. Appareil à orifice supérieur pour suspension pneumatique selon la revendication 1, dans lequel la première partie d'extension (230) et la deuxième partie d'extension (320) ont chacune une section transversale étagée.

3. Appareil à orifice supérieur pour suspension pneumatique selon la revendication 1 ou 2, dans lequel la première partie d'extension (230) et la deuxième partie d'extension (320) ont des extrémités qui sont espacées et se font face.

4. Appareil à orifice supérieur pour suspension pneumatique selon l'une quelconque des revendications 1 à 3, dans lequel la section d'étanchéité (400) comprend:
un élément élastique (410) disposé entre la première partie d'extension (230) et la deuxième partie d'extension (320); et
une partie couvercle (420) disposée pour faire face à l'élément élastique (410) et entourer la première partie d'extension (230) et la deuxième partie d'extension (320).

5. Appareil à orifice supérieur pour suspension pneumatique selon la revendication 4, dans lequel la partie couvercle (420) a ses deux extrémités qui sont déformées par pressage et pressées contre des surfaces extérieures respectives de la première partie d'extension (230) et de la deuxième partie d'extension (320).

6. Appareil à orifice supérieur pour suspension pneumatique selon la revendication 5, dans lequel la section d'étanchéité (400) comprend en outre un élément de guidage (430) qui est disposé entre au moins l'une de la première partie d'extension (230) ou de la deuxième partie d'extension (320) et la partie couvercle (420), et guide la déformation de la partie couvercle (420).

7. Appareil à orifice supérieur pour suspension pneumatique selon la revendication 6, dans lequel l'élément de guidage (430) diminue progressivement en aire en section transversale à mesure qu'il est dirigé vers la partie couvercle (420).

8. Appareil à orifice supérieur pour suspension pneumatique selon la revendication 6, dans lequel l'élément de guidage (430) est formé pour être élastiquement déformable.
